(19) **Europäisches Patentamt European Patent Office Office européen des brevets**

(11) **EP 1 720 752 B1**

(12) **FASCICULE DE BREVET EUROPEEN**

(45) Date de publication et mention
de la délivrance du brevet:
**10.04.2013 Bulletin 2013/15**

(51) Int Cl.:
**B60T 8/172** (2006.01) **B60C 23/20** (2006.01)
**B60T 8/1761** (2006.01)

(21) Numéro de dépôt: **05707606.9**

(22) Date de dépôt: **24.02.2005**

(86) Numéro de dépôt international:
**PCT/EP2005/001932**

(87) Numéro de publication internationale:
**WO 2005/092684 (06.10.2005 Gazette 2005/40)**

(54) **METHODE ET DISPOSITIF DE CONTROLE DU GLISSEMENT**

SCHLUPFREGELVERFAHREN UND -VORRICHTUNG

SLIP-CONTROL METHOD AND DEVICE

(84) Etats contractants désignés:
**AT BE BG CH CY CZ DE DK EE ES FI FR GB GR
HU IE IS IT LI LT LU MC NL PL PT RO SE SI SK TR**

(30) Priorité: **27.02.2004 FR 0401988**

(43) Date de publication de la demande:
**15.11.2006 Bulletin 2006/46**

(73) Titulaires:
• **COMPAGNIE GENERALE DES
ETABLISSEMENTS MICHELIN
63000 Clermont-Ferrand (FR)**
• **Michelin Recherche et Technique S.A.
1763 Granges-Paccot (CH)**

(72) Inventeurs:
• **FANDARD, Gérard
F-63000 Clermont-Ferrand (FR)**
• **MOUSTY, Hervé
F-63670 Orcet (FR)**

(74) Mandataire: **Lasson, Cédric Y. M.
M. F. P. Michelin
23, place des Carmes Dechaux
SGD/LG/PI - F35 - Ladoux
63040 Clermont-Ferrand Cedex 9 (FR)**

(56) Documents cités:
**EP-A- 0 818 372          US-A- 4 700 972
US-A1- 2003 144 786     US-B1- 6 470 731**

**Description**

La présente invention concerne la liaison au sol des véhicules, en particulier l'optimisation des efforts que les pneumatiques transmettent au sol.

Il existe de nombreux dispositifs et de nombreuses méthodes connus pour permettre d'utiliser au mieux le potentiel de transmission d'efforts des pneumatiques. L'un des systèmes les plus répandus est le système appelé « ABS » qui a pour fonction d'améliorer le freinage des véhicules en particulier sur sol très glissant. D'autres systèmes fonctionnant sur un principe similaire permettent d'améliorer également la traction des roues motrices. L'objectif de ces systèmes est de maintenir le pneumatique au plus proche de ses meilleures conditions de fonctionnement, pour une situation de roulage donnée. En effet, on sait que les efforts que peut transmettre un pneumatique sont limités par son potentiel d'adhérence.

Sur un sol horizontal, le potentiel d'adhérence correspond au rapport entre la force horizontale maximale transmissible et la charge verticale portée par le pneumatique dans une situation de roulage donnée. Le potentiel d'adhérence est souvent désigné "$\mu_{max}$".

$$\mu_{max} = \frac{F_{max}}{F_z}$$

(où $F_{max}$ est la force horizontale maximale et $F_z$ la charge verticale portée)

La force horizontale (F) transmise par le pneumatique peut être une force longitudinale ($F_x$) ou transversale ($F_y$) ou une combinaison des deux, auquel cas

$$F = \sqrt{Fx^2 + Fy^2} \ .$$

Le potentiel d'adhérence ($\mu_{max}$) varie à chaque instant en fonction des conditions du contact entre le pneumatique et le sol. Parmi les paramètres dont on sait qu'ils influencent la valeur de $\mu_{max}$, on peut citer les suivants : type de pneumatique, pression interne, températures du pneumatique, charge portée, vitesse de rotation, vitesse de glissement, taux de glissement, type de sol, température du sol, de l'air ambiant, présence ou non d'eau sur le sol, combinaison des efforts longitudinaux et transversaux.

Pour chaque combinaison de conditions de fonctionnement, donc pour chaque combinaison des paramètres identifiés ci-dessus, la force horizontale transmissible ($F_{max}$) peut être déterminée expérimentalement, par exemple en mettant en oeuvre un plan d'expérience complet. Ainsi, si l'on pouvait connaître à chaque instant l'ensemble des paramètres, on pourrait en déduire à chaque instant la force horizontale transmissible ($F_{max}$). Ceci est cependant impossible en pratique car on ne peut pas effectuer l'ensemble de ces mesures en temps réel et en permanence sur un véhicule et sur un pneumatique du commerce. C'est pourquoi on ne connaît pas actuellement de véhicules ou de systèmes utilisant une détermination du potentiel d'adhérence en temps réel au cours de l'utilisation normale du véhicule.

A défaut donc de pouvoir se baser sur le calcul effectif de $\mu_{max}$ à partir de mesures réelles, les systèmes connus évoqués plus haut sont basés sur le principe d'une régulation du taux de glissement. Le taux de glissement est en effet une variable accessible en temps réel de manière relativement fiable par exemple en mesurant et comparant la vitesse de rotation des différentes roues d'un véhicule. Comme le taux de glissement est un des paramètres des conditions de fonctionnement qui dépend directement des conditions d'adhérence, il est admis qu'il est un bon paramètre de régulation. La régulation vise alors un taux de glissement considéré comme "optimal" censé correspondre au fonctionnement optimal du pneumatique. Afin de maintenir le taux de glissement à son niveau optimal, on agit soit sur le couple transmis aux roues par le système de freinage soit sur celui transmis par le moteur du véhicule soit encore sur les deux à la fois.

Ce principe connu ne donne pas toujours entière satisfaction. Lorsque l'on cherche à améliorer l'efficacité des systèmes basés sur ce principe, il semble que l'on se heurte en particulier au problème suivant: le taux optimal de glissement n'est pas une valeur fixe, il dépend lui aussi des autres conditions de fonctionnement de sorte qu'il varie en fait dans de larges proportions. Pour en tenir compte, on a mis au point des systèmes et des méthodes utilisant successivement plusieurs valeurs de taux de glissement optimal et/ou modulant la valeur de taux de glissement optimal retenue en fonction de variables mesurables en temps réel sur le véhicule (par exemple, pression des pneumatiques, charge portée, vitesse de roulement).

Un procédé de contrôle du glissement selon le préambule de la revendication 1 est connu du document EP 0818372.

L'invention propose une méthode de contrôle du glissement d'un pneumatique d'un véhicule automobile, ledit pneumatique comportant une bande de roulement, ladite méthode consistant à ajuster ledit glissement à partir de la mesure d'une variable liée à la température de surface de la bande de roulement dans l'aire de contact du pneumatique avec la chaussée. Comme on le verra dans la suite de la description, le principe de cet ajustement est d'augmenter le glissement lorsque la température de surface doit être augmentée et de réduire le glissement lorsque la température doit être diminuée.

En effet, on a constaté que, pour un pneumatique donné, la force horizontale maximale transmissible dans l'aire de contact est obtenue lorsque la température de la surface du pneumatique en contact avec le sol est maintenue dans une plage de variation relativement étroite et que l'on peut agir sur cette température par l'intermédiaire du glissement de la roue.

Ainsi, selon l'invention, on peut optimiser le potentiel d'adhérence du pneumatique car on agit sur les paramètres de fonctionnement du pneumatique afin qu'il travaille en permanence dans les meilleures conditions thermiques du point de vue de l'adhérence.

Par rapport à l'état de la technique, le principe de l'invention diffère en particulier par le fait que l'on ne vise plus uniquement à exploiter l'intégralité du potentiel d'adhérence indépendamment de la température de surface mais que l'on agit en outre sur la température de surface du matériau de la bande de roulement pour optimiser le potentiel d'adhérence tout au long de la sollicitation.

Pour ce faire, au lieu de viser à obtenir un taux de glissement donné ou un taux de glissement choisi parmi plusieurs taux de glissements donnés, on ajuste le glissement dans le but d'obtenir une température donnée de la surface du pneumatique.

Le glissement, c'est à dire le fait que la bande de roulement d'un pneumatique glisse par rapport au sol lorsque le pneumatique transmet un effort aussi faible soit-il, peut être quantifié sous la forme de la vitesse de glissement ou sous la forme du taux de glissement de manière connue dans le domaine des pneumatiques.

Agir sur le glissement correspond donc à augmenter ou réduire (en valeur absolue) la vitesse de glissement ou le taux de glissement. Pour des conditions stables par ailleurs, lorsque le glissement augmente, la température de surface de la bande de roulement dans l'aire de contact augmente. Au contraire, lorsque le glissement diminue, la température de la bande de roulement dans l'aire de contact diminue. Ceci est dû à l'effet du frottement.

La température optimale visée dépend largement du matériau utilisé dans la bande de roulement (ou en surface de la bande de roulement). Certaines compositions de caoutchouc atteignent leur adhérence maximale à une température d'environ 20 °C alors que d'autres ne l'atteignent qu'à environ 120 °C. De plus, cette valeur de température optimale peut varier légèrement en fonction du glissement et des caractéristiques du sol.

La température de surface de la bande de roulement peut être mesurée en dehors de l'aire de contact du pneumatique. En effet, la température de surface en dehors de l'aire de contact est bien liée à celle qui règne dans l'aire de contact et une mesure en dehors de l'aire de contact est relativement simple à réaliser. La température de surface considérée ou mesurée peut être une moyenne sur une étendue donnée ou sur un nombre limité de points, pourvu que les variations soient bien représentatives des variations de température dans l'aire de contact.

L'invention concerne également un dispositif de contrôle du glissement d'un pneumatique d'un véhicule automobile, ledit dispositif comprenant au moins un moyen apte à ajuster le glissement et un moyen de mesure d'une variable liée à la température de surface de la bande de roulement dudit pneumatique dans l'aire de contact.

La figure 1 représente schématiquement le principe du dispositif de contrôle selon l'invention.

Les figures 2a et 2b sont des schémas bloc d'exemples de mise en oeuvre de la méthode de contrôle selon l'invention.

La figure 3 est un graphe montrant un exemple d'évolution du potentiel d'adhérence en fonction de la température de surface.

La figure 4 est un graphe permettant de comparer l'évolution du potentiel d'adhérence en fonction de la température de surface pour deux vitesses de glissement différentes.

La figure 5 est un graphe montrant la relation entre la température de surface optimale et la vitesse de glissement.

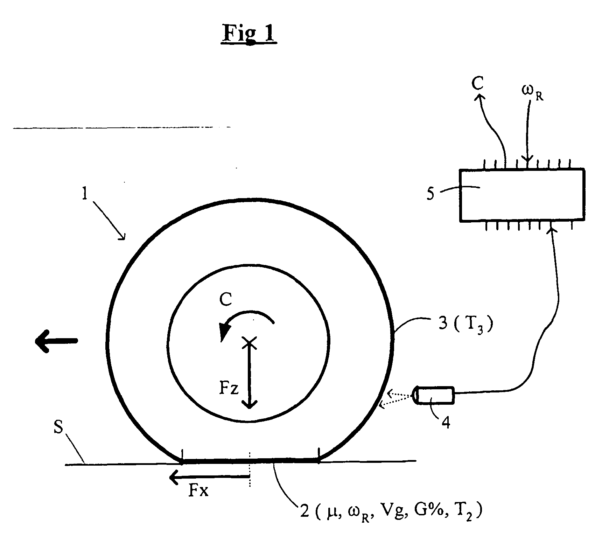

A la figure 1, on a représenté schématiquement un pneumatique (1) roulant sur le sol (S). Ce pneumatique est soumis à un couple (C) autour de son axe et à une charge verticale (Fz) de la part du véhicule qu'il porte (le véhicule n'est pas représenté ici). Le pneumatique développe une aire de contact (2) par l'intermédiaire de laquelle le sol transmet au pneumatique une force horizontale, par exemple une force uniquement longitudinale (Fx).

Si l'on considère que le pneumatique roule vers la gauche de la figure (selon l'indication de la flèche), on peut en déduire que cette représentation correspond au cas de l'application à la roue d'un couple moteur. Si au contraire, on imagine que le pneumatique roule vers la droite de la figure, le dessin représente alors le cas de l'application d'un couple freineur.

Un moyen de mesure (4), par exemple une caméra thermique ou un capteur infrarouge, placé au voisinage de la sortie de l'aire de contact, observe la surface de la bande de roulement (3) et fournit un signal représentatif de la température de ladite surface. Ce moyen de mesure est relié à un calculateur (5). Ce calculateur peut ajuster, par exemple par l'intermédiaire du système de gestion moteur ou du système de freinage, le couple (C) transmis à la roue et/ou la vitesse de rotation de la roue et ainsi agir sur le glissement en fonction de la mesure de température.

Selon l'exemple de la représentation, la température de surface de la bande de roulement dans l'aire de contact (2) vaut "$T_2$", la vitesse de rotation de la roue vaut "$\omega_R$", la vitesse de glissement vaut "Vg", le taux de glissement vaut "G%", le rapport entre force transmise (Fx) et charge (Fz) vaut "$\mu$".

La température de surface ($T_3$) de la bande de roulement (3) en dehors de l'aire de contact est une variable corrélée à la température ($T_2$) de surface de la bande de roulement dans l'aire de contact (2). Naturellement, cette corrélation varie en particulier selon le lieu de la mesure. On comprend aisément que la température mesurée à proximité de la sortie de l'aire de contact est une représentation plus fidèle de la température dans l'aire de contact qu'une mesure effectuée par exemple à proximité de l'entrée de l'aire de contact.

La fidélité de la variable ($T_3$) mesurée en dehors de l'aire de contact vis-à-vis de la température de surface de la bande de roulement dans l'aire de contact ($T_2$) peut être améliorée par la prise en compte d'au moins une variable corrective comme la vitesse du véhicule, le glissement, la température de l'air extérieur ou du sol ou la température de l'air contenu dans le pneumatique. Cependant, si l'on effectue cette mesure de température de surface ($T_3$) à la sortie de l'aire de contact, on dispose déjà d'une variable tout à fait représentative de la température dans l'aire de contact ($T_2$).

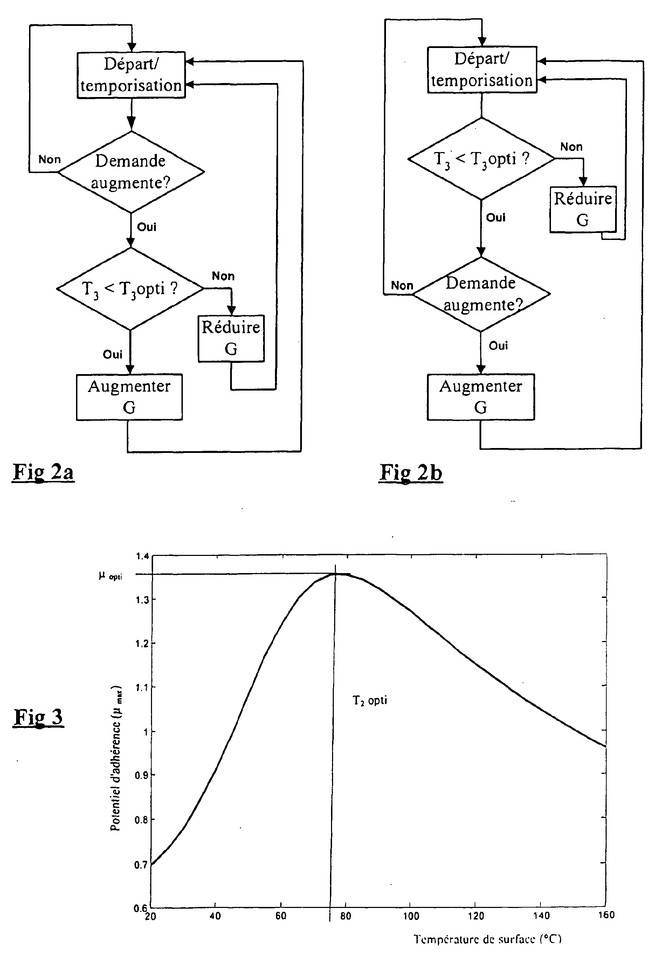

A la figure 2a, on a représenté graphiquement un exemple d'algorithme mettant en oeuvre la méthode selon l'invention.

Le calculateur vérifie périodiquement (par exemple avec une fréquence de 100 Hz) ou même en temps réel si la demande de freinage ou d'accélération exprimée par le conducteur augmente ou non. Tant que la demande n'augmente pas, aucune action n'est entreprise.

Si la demande augmente, on compare la température mesurée ($T_3$ sur cet exemple) à la température optimale visée ($T_3$opti sur cet exemple).

Si $T_3$ est alors inférieure à $T_3$opti, cela signifie que le potentiel d'adhérence ($\mu_{max}$) peut être augmenté si l'on augmente la température dans l'aire de contact. Le calculateur commande alors aux actionneurs concernés (moteur/transmission ou système de freinage) d'augmenter leur sollicitation sur le pneumatique afin d'augmenter le glissement (G). Cette augmentation du glissement a alors pour conséquence d'augmenter la température dans l'aire de contact ($T_2$) et donc d'augmenter la température mesurée en dehors de l'aire de contact ($T_3$).

Si au contraire $T_3$ est supérieure à $T_3$opti, cela signifie que le potentiel d'adhérence ($\mu_{max}$) peut être augmenté si la température dans l'aire de contact diminue. Dans ces conditions, le calculateur commande aux actionneurs concernés (moteur/transmission ou système de freinage) de réduire leur sollicitation sur le pneumatique afin de réduire le glissement (G) ce qui a pour conséquence de réduire $T_2$ et par conséquent $T_3$.

A la figure 2b, on a représenté graphiquement un autre exemple d'algorithme mettant en oeuvre la méthode selon l'invention.

Le calculateur compare périodiquement (par exemple avec une fréquence de 100 Hz) ou même en temps réel la température mesurée ($T_3$) à la température optimale visée ($T_3$opti).

Si $T_3$ est inférieure à $T_3$opti, cela signifie que le potentiel d'adhérence ($\mu_{max}$) peut être augmenté en augmentant la température dans l'aire de contact. Si dans ces conditions le conducteur du véhicule augmente sa demande d'accélération ou de freinage, le calculateur commande aux actionneurs concernés d'augmenter leur sollicitation sur le pneumatique afin d'augmenter le glissement (G). Cette augmentation du glissement a alors pour conséquence d'augmenter $T_2$ et par conséquent $T_3$.

Si $T_3$ est supérieure à $T_3$opti, cela signifie que le potentiel d'adhérence ($\mu_{max}$) peut être augmenté si la température dans l'aire de contact diminue. Dans ces conditions, le calculateur commande aux actionneurs concernés de réduire leur sollicitation sur le pneumatique afin de réduire le glissement (G) ce qui a pour conséquence de réduire $T_2$ et par conséquent $T_3$. Dans cette situation, la prise en compte de l'intention du conducteur n'est pas indispensable.

L'intention du conducteur peut être déduite (de manière connue en soi) par exemple selon les positions imposées aux pédales d'accélérateur et de frein par le conducteur ou selon les efforts exercés sur lesdites pédales. Alternativement ou en combinaison, cette détection du besoin d'optimiser le potentiel d'adhérence peut s'appuyer sur le franchissement d'un seuil de glissement. En effet, un niveau de glissement par exemple comparable à ce lui auquel un système ABS conventionnel déclenche une correction peut être considéré comme une indication fiable du fait qu'une optimisation du potentiel d'adhérence est souhaitable.

La figure 3 est un graphe montrant un exemple d'évolution du potentiel d'adhérence ($\mu_{max}$) en fonction de la température ($T_2$) dans l'aire de contact. On y voit bien que le potentiel d'adhérence augmente avec la température jusqu'à sa valeur optimale ($\mu_{opti}$) pour une température optimale ($T_2$opti). Au delà de cette température optimale, le potentiel d'adhérence diminue. Un principe de l'invention est de chercher à maintenir la surface du pneumatique dans l'aire de contact au voisinage de cette température optimale au moins dans les phases où l'on désire transmettre les efforts les plus importants, c'est à dire lorsque l'on souhaite disposer du potentiel d'adhérence maximal du pneumatique. Ceci est généralement le cas pour un freinage d'urgence ou lors d'accélérations ou de démarrages puissants.

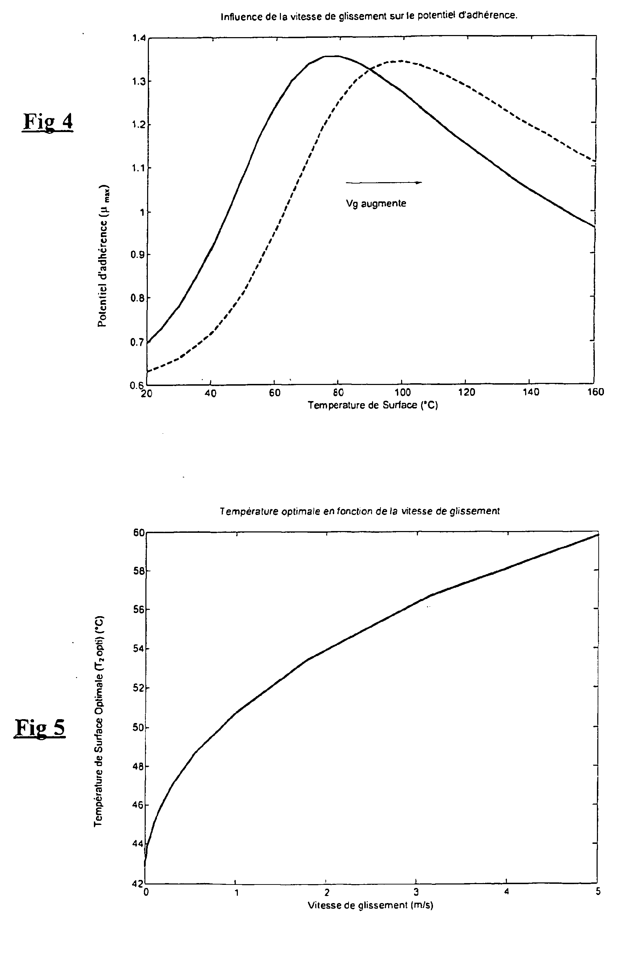

La figure 4 est un graphe permettant de comparer deux courbes similaires à celle de la figure 3. Chaque courbe correspond à une vitesse de glissement différente, les autres conditions demeurant identiques. On constate que les deux courbes sont globalement décalées l'une par rapport à l'autre. Si l'on observe la température optimale ($T_2$opti) pour chaque courbe, on constate qu'elle augmente lorsque la vitesse de glissement augmente. Cette tendance est encore mieux visible sur la figure 5 qui montre un exemple d'évolution de la température optimale ($T_2$opti) en fonction de la vitesse de glissement.

On voit bien sur ces différentes courbes qu'il peut être intéressant de tenir compte de la vitesse de glissement pour la détermination de la température optimale ($T_2$opti) dans l'aire de contact et donc également pour la détermination de la température optimale ($T_3$opti) hors de l'aire de contact, le cas échéant. Par exemple, la méthode peut comporter à chaque cycle (ou à une fréquence différente) une étape à laquelle on détermine la température optimale en fonction de la vitesse de glissement effective.

La fidélité de la variable ($T_3$) mesuré en dehors de l'aire de contact vis à vis de la température de surface de la bande de roulement dans l'aire de contact ($T_2$) peut être améliorée par la prise en compte d'au moins une variable corrective comme la vitesse de roulement, le glissement, la température de l'air extérieur ou du sol ou la température de l'air contenu dans le pneumatique. Cependant, si l'on effectue cette mesure de température de surface ($T_3$) à la sortie de l'aire de contact, on dispose déjà d'un paramètre tout à fait représentatif de la température ($T_2$) dans l'aire de contact.

La méthode et le dispositif de l'invention peuvent être mis en oeuvre sur un essieu directeur ou non directeur, moteur ou non moteur. On peut appliquer la méthode indépendamment à chaque roue du véhicule ou en intégrant les mesures de deux ou plusieurs roues par exemple pour tenir compte de la disponibilité de moyens de contrôle du couple exercé sur les roues par le moteur ou les freins. L'invention pourra en particulier s'appliquer avantageusement sur les véhicules rapides et puissants.

De plus si le véhicule est équipé de moyens de mesure de son accélération, il peut être avantageux de procéder ponctuellement ou périodiquement à un « étalonnage » des données de calcul utilisées par le calculateur. On peut en effet lors d'une accélération importante effectuer une série de mesures de température de surface (ou de la variable liée à la température que l'on utilise) et parallèlement une série de mesures d'efforts transmis aux roues ou de mesures d'accélération du véhicule. On peut alors déterminer pour quelle température l'accélération ou l'effort produit est effectivement maximal(e) et réajuster si nécessaire les données de calcul utilisées dans le contrôle du glissement et en particulier dans la détermination de la température optimale visée. Cet étalonnage peut par exemple permettre de tenir compte de changements dans les conditions de roulage (par exemple dans la nature et l'état du sol) ou de l'évolution des caractéristiques des matériaux en contact avec le sol du fait par exemple du vieillissement et de l'usure progressive de la bande de roulement du pneumatique.

L'invention s'applique non seulement pour le roulage en ligne droite mais également en virage. En effet, comme on l'a vu plus haut, en virage les efforts (F) transmis par le pneumatique sont à la fois longitudinaux (Fx) et transversaux (Fy). Le potentiel d'adhérence est donc « consommé » en même temps par le développement des deux composantes (Fx et Fy). Cependant, on comprend bien que, même si la méthode de contrôle selon l'invention n'agit directement que sur la composante longitudinale du glissement, la méthode de l'invention a pour effet d'optimiser le potentiel d'adhérence indépendamment de la direction de sollicitation, c'est à dire également le potentiel disponible pour développer des efforts transversaux.

**Revendications**

1. Méthode de contrôle du glissement d'un pneumatique (1) d'un véhicule automobile pour optimiser le potentiel d'adhérence dudit pneumatique, ledit pneumatique comportant une bande de roulement (3), ladite méthode consistant à ajuster ledit glissement à partir de la mesure d'une variable liée à la température ($T_2$) de surface de la bande de roulement dans l'aire de contact (2) du pneumatique, **caractérisé en ce que** le glissement est ajusté de manière à modifier ladite température de surface pour qu'elle se rapproche d'une température optimale ($T_2$opti).

2. Méthode de contrôle selon la revendication 1, dans laquelle ladite variable liée est la température ($T_3$) de surface de la bande de roulement (3), cette variable étant mesurée en dehors de l'aire de contact du pneumatique.

3. Méthode de contrôle selon la revendication 2, dans laquelle la température ($T_3$) de surface de la bande de roulement est mesurée au voisinage de la sortie de l'aire de contact du pneumatique.

4. Méthode de contrôle selon l'une des revendications 2 ou 3, dans laquelle la mesure de la température de surface de la bande de roulement est une mesure optique.

5. Méthode de contrôle selon l'une des revendications précédentes comprenant en outre une étape d'acquisition de données d'étalonnage, ladite étape consistant à enregistrer une série de mesures de ladite variable liée et une série correspondante de mesure d'efforts ou d'accélérations subi(e)s par le véhicule afin de déterminer une valeur préférée des données de calcul utilisés dans le contrôle du glissement.

6. Dispositif de contrôle du glissement d'un pneumatique d'un véhicule automobile pour mettre en oeuvre la méthode selon l'une des revendications précédentes, ledit dispositif comprenant un moyen apte à ajuster le glissement et un moyen de mesure (4) d'une variable liée à la température ($T_2$) de surface de la bande de roulement dudit pneumatique dans l'aire de contact.

7. Dispositif selon la revendication 6 dans lequel le moyen apte à ajuster le glissement comprend un moyen de contrôle du couple délivré par le moteur du véhicule à la roue.

8. Dispositif selon l'unes des revendications 6 ou 7 dans lequel le moyen apte à ajuster le glissement comprend un système de gestion de la puissance de freinage ou du couple de freinage de la roue.

**9.** Dispositif selon l'une des revendications 6 à 8 dans lequel le moyen de mesure de la variable liée est un moyen optique (4) de mesure de la température ($T_3$) de la bande de roulement en dehors de l'aire de contact (2).

**10.** Dispositif selon la revendication 9 dans lequel le moyen optique de mesure est une caméra thermique (4) placée en regard de la sortie de l'aire de contact.

**11.** Dispositif selon l'une des revendications 6 à 10 comprenant en outre un moyen de mesure de l'accélération du véhicule.

**Claims**

**1.** A method for controlling the slip of a pneumatic tyre (1) of an automobile for optimizing the grip of said tyre, said tyre comprising a tread (3), said method consisting of adjusting said slip using the measurement of a variable linked to the surface temperature ($T_2$) of the tread in the contact area (2) of the tyre, in which the slip is adjusted in order to bring said surface temperature towards an optimal temperature ($T_2$opti).

**2.** A control method according to Claim 1, in which said linked variable is the surface temperature ($T_3$) of the tread (3), this variable being measured outside the contact area of the tyre.

**3.** A control method according to Claim 2, in which the surface temperature ($T_3$) of the tread is measured in the vicinity of the exit from the contact area of the tyre.

**4.** A control method according to one of Claims 2 or 3, in which the measurement of the surface temperature of the tread is an optical measurement.

**5.** A control method according to one of the preceding Claims , furthermore comprising a step of acquisition of calibration data, said step consisting of recording a series of measurements of said linked variable and a corresponding series of measurements of forces or accelerations to which the vehicle is subjected in order to determine a preferred value of the calculation data used in controlling the slip.

**6.** A device for controlling the slip of a pneumatic tyre of an automobile adapted for using the method of one of the preceding Claims, said device comprising a means capable of adjusting the slip and a means (4) for measuring a variable linked to the surface temperature ($T_2$) of the tread of said tyre in the contact area.

**7.** A device according to Claim 6, in which the means capable of adjusting the slip comprises a means for controlling the torque supplied by the vehicle engine to the wheel.

**8.** A device according to one of Claims 6 or 7, in which the means capable of adjusting the slip comprises a management system for the braking power or the braking torque of the wheel. P10-1608 ECT-EN

**9.** A device according to one of Claims 6 to 8, in which the means for measuring the linked variable is an optical means (4) for measuring the temperature ($T_3$) of the tread outside the contact area (2).

**10.** A device according to Claim 9, in which the optical measurement means is a thermal camera (4) placed opposite the exit from the contact area.

**11.** A device according to one of Claims 6 to 10, furthermore comprising a means for measuring the acceleration of the vehicle.

**Patentansprüche**

**1.** Verfahren zur Regelung des Schlupfs eines Luftreifens (1) eines Kraftfahrzeugs, um das Adhäsionspotential des Luftreifens zu optimieren, wobei der Luftreifen einen Laufstreifen (3) enthält, wobei das Verfahren darin besteht, den Schlupf ausgehend von der Messung einer mit der Oberflächentemperatur ($T_2$) des Laufstreifens in der Aufstandsfläche (2) des Luftreifens verbundenen Variablen einzustellen, **dadurch gekennzeichnet, dass** der Schlupf so eingestellt wird, dass die Oberflächentemperatur verändert wird, damit sie sich einer optimalen Temperatur ($T_2$opti) annähert.

**2.** Regelungsverfahren nach Anspruch 1, bei dem die verbundene Variable die Oberflächentemperatur ($T_3$) des Laufstreifens (3) ist, wobei diese Variable außerhalb der Aufstandsfläche des Luftreifens gemessen wird.

**3.** Regelungsverfahren nach Anspruch 2, bei dem die Oberflächentemperatur ($T_3$) des Laufstreifens in der Nähe des Ausgangs der Aufstandsfläche des Luftreifens gemessen wird.

**4.** Regelungsverfahren nach einem der Ansprüche 2 oder 3, bei dem die Messung der Oberflächentemperatur des Laufstreifens eine optische Messung ist.

**5.** Regelungsverfahren nach einem der vorhergehenden Ansprüche, das außerdem einen Schritt der Erfassung von Kalibrierungsdaten enthält, wobei der Schritt darin besteht, eine Reihe von Messwerten der verbundenen Variablen und eine entsprechende Reihe einer Messung von Kräften oder Beschleunigungen, die das Fahrzeug erfahren hat, zu speichern, um einen bevorzugten Wert der Rechendaten zu bestimmen, die bei der Regelung des Schlupfs verwendet werden.

6. Vorrichtung zur Regelung des Schlupfs eines Luftreifens eines Kraftfahrzeugs, um das Verfahren nach einem der vorhergehenden Ansprüche anzuwenden, wobei die Vorrichtung eine Einrichtung, die den Schlupf einstellen kann, und eine Einrichtung (4) zur Messung einer mit der Oberflächentemperatur ($T_2$) des Laufstreifens in der Aufstandsfläche verbundenen Variablen enthält.

7. Vorrichtung nach Anspruch 6, bei der die Einrichtung, die den Schlupf einstellen kann, eine Regeleinrichtung des Drehmoments enthält, das vom Motor des Fahrzeugs an das Rad geliefert wird.

8. Vorrichtung nach einem der Ansprüche 6 oder 7, wobei die Einrichtung, die den Schlupf einstellen kann, ein System zur Verwaltung der Bremsleistung oder des Bremsmoments des Rads enthält.

9. Vorrichtung nach einem der Ansprüche 6 bis 8, wobei die Einrichtung zur Messung der verbundenen Variablen eine optische Einrichtung (4) zur Messung der Temperatur ($T_3$) des Laufstreifens außerhalb der Aufstandsfläche (2) ist.

10. Vorrichtung nach Anspruch 9, wobei die optische Messeinrichtung eine Wärmekamera (4) ist, die gegenüber dem Ausgang der Aufstandsfläche angeordnet ist.

11. Vorrichtung nach einem der Ansprüche 6 bis 10, die außerdem eine Einrichtung zur Messung der Beschleunigung des Fahrzeugs enthält.

## Fig 1

**Fig 2a**

**Fig 2b**

**Fig 3**

**Fig 4**

Influence de la vitesse de glissement sur le potentiel d'adhérence.

**Fig 5**

Température optimale en fonction de la vitesse de glissement

**EP 1 720 752 B1**

## RÉFÉRENCES CITÉES DANS LA DESCRIPTION

**Documents brevets cités dans la description**

- EP 0818372 A